# EUROPEAN PATENT APPLICATION

(11) **EP 4 691 834 A1**
(43) Date of publication of application: **11.02.2026**
(21) Application number: 24778024.0
(22) Date of filing: 26.03.2024
(51) Int. Cl.: B60L 53/00

(54) **CHARGING APPARATUS FOR TRACTION BATTERY, AND CHARGING CONTROL SYSTEM AND VEHICLE**

(30) Priority: 29.03.2023 CN 202310362586
(71) Applicant: BYD Company Limited, Shenzhen, Guangdong 518118 (CN)
(72) Inventor: LING, Heping, Shenzhen, Guangdong 518118 (CN); ZHAI, Zhen, Shenzhen, Guangdong 518118 (CN); LIU, Junhua, Shenzhen, Guangdong 518118 (CN); LIU, Yuhan, Shenzhen, Guangdong 518118 (CN); CHENG, Liangpeng, Shenzhen, Guangdong 518118 (CN)
(74) Representative: Mathys & Squire
(86) International application number: PCT/CN2024/083880
(87) International publication number: WO 2024/199236

(57) **Abstract**

A vehicle has a charging control system. The charging control system has a power battery charging apparatus. The charging apparatus includes: an alternating current charging module, where an alternating current charging interface is adapted to be connected to a first end of the alternating current charging module, and a power battery is adapted to be connected to a second end of the alternating current charging module; and a photovoltaic charging module, where a photovoltaic solar module is adapted to be connected to a first end of the photovoltaic charging module, and the power battery is adapted to be connected to a second end of the photovoltaic charging module. In a first state, the alternating current charging module is configured to convert an alternating current input through the alternating current charging interface into a direct current to charge the power battery, and the photovoltaic charging module is configured to charge the power battery after electric energy output by the photovoltaic solar module undergoes a voltage change.

## Description

### CROSS-REFERENCE TO RELATED DISCLOSURES

The present disclosure is provided based on Chinese Patent Application No. 2023103625865, filed on March 29, 2023, and claims priority to this Chinese Patent Application, which is incorporated herein by reference in its entirety.

### TECHNICAL FIELD

The present disclosure relates to the field of vehicle technologies, and in particular, to a power battery charging apparatus, a charging control system, and a vehicle.

### BACKGROUND

Solar energy is a high-quality and sustainable automotive energy source, and has relatively high application value. However, in the related technology, energy of photovoltaic charging cannot be fully utilized, causing an increase in costs and a waste of photovoltaic energy.

### SUMMARY

The present disclosure is intended to resolve one of technical problems in a related technology to at least a specific extent. In view of this, a first objective of the present disclosure is to provide a power battery charging apparatus. A power battery is charged through an alternating current charging interface and a photovoltaic solar module in a coordinated manner, so that the charging speed can be increased, the solar conversion rate can be increased, and the demand for grid energy can be reduced, thereby reducing charging costs for vehicle owners.

A second objective of the present disclosure is to provide a charging control system.

A third objective of the present disclosure is to provide a vehicle.

To achieve the foregoing objectives, an embodiment of a first aspect of the present disclosure provides a power battery charging apparatus, including: an alternating current charging module, where an alternating current charging interface is adapted to be connected to a first end of the alternating current charging module, and a power battery is adapted to be connected to a second end of the alternating current charging module; and a photovoltaic charging module, where a photovoltaic solar module is adapted to be connected to a first end of the photovoltaic charging module, and the power battery is adapted to be connected to a second end of the photovoltaic charging module. In a first state, the alternating current charging module is configured to convert an alternating current input through the alternating current charging interface into a direct current to charge the power battery, and the photovoltaic charging module is configured to charge the power battery after electric energy output by the photovoltaic solar module undergoes a voltage change.

According to the power battery charging apparatus in this embodiment of the present disclosure, in the first state, the alternating current charging module is configured to convert an alternating current input through the alternating current charging interface into a direct current to charge the power battery, and the photovoltaic charging module is configured to charge the power battery after electric energy output by the photovoltaic solar module undergoes a voltage change. Therefore, the charging apparatus can increase the charging speed, increase the solar conversion rate, and reduce the demand for grid energy, thereby reducing charging costs for vehicle owners.

In addition, the power battery charging apparatus according to the foregoing embodiment of the present disclosure may further have the following additional technical features:

According to an embodiment of the present disclosure, the alternating current charging module includes at least a first inductor, a first bridge arm, and a second bridge arm, a positive electrode of the alternating current charging interface is adapted to be connected to a first end of the first inductor, a second end of the first inductor is connected to a midpoint of the first bridge arm, a negative electrode of the alternating current charging interface is adapted to be connected to a midpoint of the second bridge arm, a positive electrode of the power battery is adapted to be connected to a first end of the first bridge arm and a first end of the second bridge arm, and a negative electrode of the power battery is adapted to be connected to a second end of the first bridge arm and a second end of the second bridge arm.

According to an embodiment of the present disclosure, in a second state, the first bridge arm and the second bridge arm are configured to convert an alternating current input through the alternating current charging interface into a direct current to charge the power battery.

According to an embodiment of the present disclosure, the photovoltaic charging module includes a second inductor and a third bridge arm, a positive electrode of the photovoltaic solar module is adapted to be connected to a first end of the second inductor, a second end of the second inductor is connected to a midpoint of the third bridge arm, the positive electrode of the power battery is adapted to be connected to a first end of the third bridge arm, and the negative electrode of the power battery is adapted to be connected to a second end of the third bridge arm.

According to an embodiment of the present disclosure, in a third state, the third bridge arm is configured to charge the power battery after electric energy output by the photovoltaic solar module undergoes a voltage change.

According to an embodiment of the present disclosure, an output voltage of the photovoltaic solar module is greater than 60 V.

According to an embodiment of the present disclosure, the alternating current charging module further includes a third inductor and a fourth bridge arm, the positive electrode of the alternating current charging interface is adapted to be connected to a first end of the third inductor, a second end of the third inductor is connected to a midpoint of the fourth bridge arm, the positive electrode of the power battery is adapted to be connected to a first end of the fourth bridge arm, and the negative electrode of the power battery is adapted to be connected to a second end of the fourth bridge arm.

According to an embodiment of the present disclosure, the power battery charging apparatus further includes a controller. The controller is configured to: in a fourth state, control the second bridge arm, and alternately control the first bridge arm and the fourth bridge arm, to convert an alternating current input through the alternating current charging interface into a direct current to charge the power battery.

According to an embodiment of the present disclosure, the controller is configured to: in a fifth state, control the second bridge arm, and alternately control the first bridge arm and the fourth bridge arm, to convert an alternating current input through the alternating current charging interface into a direct current to charge the power battery; and control a third bridge arm, to charge the power battery after electric energy output by the photovoltaic solar module undergoes a voltage change.

According to an embodiment of the present disclosure, the power battery charging apparatus further includes a DC-DC module. A first end of the DC-DC module is separately connected to the alternating current charging module and the photovoltaic charging module, and the power battery is adapted to be connected to both the alternating current charging module and the photovoltaic charging module.

According to an embodiment of the present disclosure, an inductor in a PFC (Power Factor Correction) circuit is reused as the first inductor and the third inductor, and a bridge arm in the PFC circuit is reused as the first bridge arm and the second bridge arm.

According to an embodiment of the present disclosure, an inductor in a PFC circuit is reused as the second inductor, and a bridge arm in the PFC circuit is reused as the third bridge arm.

According to an embodiment of the present disclosure, the power battery charging apparatus further includes a buffer module. The buffer module is disposed between the positive electrode and a negative electrode of the photovoltaic solar module, and the buffer module is configured to mitigate impact on a component of a voltage conversion module at a moment when the photovoltaic solar module outputs electric energy to the voltage conversion module.

According to an embodiment of the present disclosure, the buffer module includes a first resistor and a first capacitor that are connected in series. The other end of the first resistor is connected to the positive electrode of the photovoltaic solar module, and the other end of the first capacitor is connected to the negative electrode of the photovoltaic solar module.

According to an embodiment of the present disclosure, the buffer module includes a fourth inductor and a second capacitor that are connected in series. The other end of the fourth inductor is connected to the positive electrode of the photovoltaic solar module, and the other end of the second capacitor is connected to the negative electrode of the photovoltaic solar module.

According to an embodiment of the present disclosure, a DC-DC circuit of an on-board charger OBC (On-board Charger) module is reused as the DC-DC module.

To achieve the foregoing objectives, an embodiment of a second aspect of the present disclosure provides a charging control system, including a power battery and the foregoing power battery charging apparatus. The power battery is connected to a first end of the charging apparatus.

In addition, the charging control system according to the foregoing embodiment of the present disclosure may further have the following additional technical features:

According to an embodiment of the present disclosure, the charging control system further includes a photovoltaic solar module. The photovoltaic solar module is connected to a second end of the charging apparatus.

According to an embodiment of the present disclosure, the charging control system further includes an alternating current charging interface. The alternating current charging interface is connected to the second end of the charging apparatus.

To achieve the foregoing objectives, an embodiment of a third aspect of the present disclosure provides a vehicle, including the foregoing charging control system or the foregoing power battery charging apparatus.

According to the vehicle in this embodiment of the present disclosure, the foregoing charging control system is used, so that the charging speed can be increased, the solar conversion rate can be increased, and the demand for grid energy can be reduced, thereby reducing charging costs for vehicle owners.

The additional aspects and advantages of the present disclosure are partially set forth in the following descriptions, and partially clear from the following descriptions, or understood through practice of the present disclosure.

### BRIEF DESCRIPTION OF DRAWINGS

FIG. 1 is a schematic block diagram of a power battery charging apparatus according to an embodiment of the present disclosure;
FIG. 2 is a circuit topology diagram of a power battery charging apparatus according to an embodiment of the present disclosure;
FIG. 3 is a circuit topology diagram of a power battery charging apparatus according to another embodiment of the present disclosure;
FIG. 4 is a circuit topology diagram of a power battery charging apparatus according to still another embodiment of the present disclosure;
FIG. 5 is a circuit topology diagram of a power battery charging apparatus according to yet another embodiment of the present disclosure;
FIG. 6 is a circuit topology diagram of a power battery charging apparatus according to an embodiment of the present disclosure;
FIG. 7 is a circuit topology diagram of a power battery charging apparatus according to another embodiment of the present disclosure;
FIG. 8 is a circuit topology diagram of a power battery charging apparatus according to an embodiment of the present disclosure;
FIG. 9 is a circuit topology diagram of a power battery charging apparatus according to another embodiment of the present disclosure;
FIG. 10 is a circuit topology diagram of a power battery charging apparatus according to still another embodiment of the present disclosure;
FIG. 11 is a circuit topology diagram of a power battery charging apparatus according to yet another embodiment of the present disclosure;
FIG. 12 is a circuit topology diagram of a power battery charging apparatus according to an embodiment of the present disclosure;
FIG. 13 is a circuit topology diagram of a power battery charging apparatus according to another embodiment of the present disclosure;
FIG. 14 is a circuit topology diagram of a power battery charging apparatus according to still another embodiment of the present disclosure;
FIG. 15 is a circuit topology diagram of a power battery charging apparatus according to yet another embodiment of the present disclosure;
FIG. 16 is a circuit topology diagram of a power battery charging apparatus according to an embodiment of the present disclosure;
FIG. 17 is a circuit topology diagram of a power battery charging apparatus according to an embodiment of the present disclosure;
FIG. 18 is a circuit topology diagram of a power battery charging apparatus according to another embodiment of the present disclosure;
FIG. 19 is a circuit topology diagram of a power battery charging apparatus according to an embodiment of the present disclosure;
FIG. 20 is a schematic block diagram of a charging control system according to an embodiment of the present disclosure; and
FIG. 21 is a schematic block diagram of a vehicle according to an embodiment of the present disclosure.

### DESCRIPTION OF EMBODIMENTS

The following describes in detail embodiments of the present disclosure. Examples of the embodiments are shown in the accompanying drawings, where same or similar reference numerals throughout represent same or similar elements or elements having same or similar functions. The embodiments described below with reference to the accompanying drawings are examples, and are intended to explain the present disclosure and will not be understood as limitations on the present disclosure.

The following describes, with reference to the accompanying drawings, a power battery charging apparatus, a charging control system, and a vehicle provided in embodiments of the present disclosure.

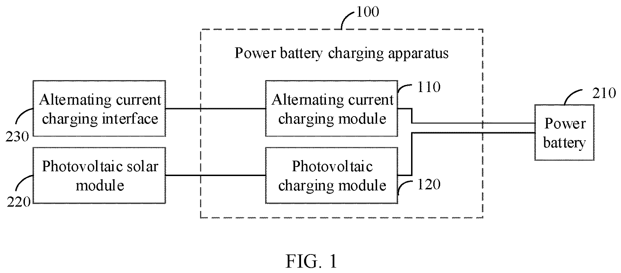

FIG. 1 is a schematic block diagram of a power battery charging apparatus according to an embodiment of the present disclosure.

As shown in FIG. 1, the power battery charging apparatus 100 may include an alternating current charging module 110 and a photovoltaic charging module 120.

An alternating current charging interface 230 is adapted to be connected to a first end of the alternating current charging module 110, and a power battery 210 is adapted to be connected to a second end of the alternating current charging module 110. A photovoltaic solar module 220 is adapted to be connected to a first end of the photovoltaic charging module 120, and the power battery 210 is adapted to be connected to a second end of the photovoltaic charging module 120. In a first state, the alternating current charging module 110 is configured to convert an alternating current input through the alternating current charging interface 230 into a direct current to charge the power battery 210, and the photovoltaic charging module 120 is configured to charge the power battery 210 after electric energy output by the photovoltaic solar module 220 undergoes a voltage change.

Specifically, the alternating current charging interface 230 is connected to one end of the alternating current charging module 110, the photovoltaic solar module 220 is connected to one end of the photovoltaic charging module 120, the other end of the alternating current charging module 110 is connected to the power battery 210, and the other end of the photovoltaic charging module 120 is connected to the power battery 210, so that energy output by the alternating current charging interface 230 can pass through the alternating current charging module 110, and energy output by the photovoltaic solar module 220 can pass through the photovoltaic charging module. In the first state, namely, a coordinated state of single-phase alternating current charging and photovoltaic charging, for example, a controller may control the alternating current charging module 110, so that an alternating current input through the alternating current charging interface 230 is converted into a direct current after passing through the alternating current charging module 110, to charge the power battery 210. The controller may further control the photovoltaic charging module 120, so that a voltage changes after electric energy output by the photovoltaic solar module 220 passes through the photovoltaic charging module 120, to charge the power battery 210 at an increased voltage. Therefore, the power battery 210 is charged through the alternating current charging interface 230, and the power battery 210 is also charged through the photovoltaic solar module 220, so that the charging speed can be increased, the solar conversion rate can be increased, and the demand for grid energy can be reduced, thereby reducing charging costs for vehicle owners.

The following describes in detail the power battery charging apparatus in the present disclosure.

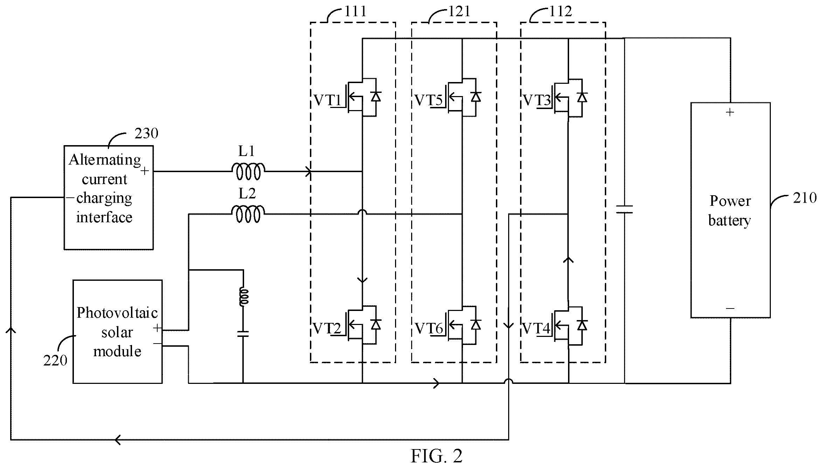

According to an embodiment of the present disclosure, as shown in FIG. 2, the alternating current charging module 110 includes at least a first inductor L1, a first bridge arm 111, and a second bridge arm 112, a positive electrode of the alternating current charging interface 230 is adapted to be connected to a first end of the first inductor L1, a second end of the first inductor L1 is connected to a midpoint of the first bridge arm 111, a negative electrode of the alternating current charging interface 230 is adapted to be connected to a midpoint of the second bridge arm 112, a positive electrode of the power battery 210 is adapted to be connected to a first end of the first bridge arm 111 and a first end of the second bridge arm 112, and a negative electrode of the power battery 210 is adapted to be connected to a second end of the first bridge arm 111 and a second end of the second bridge arm 112.

According to an embodiment of the present disclosure, in a second state, the first bridge arm 111 and the second bridge arm 112 are configured to convert an alternating current input through the alternating current charging interface 230 into a direct current to charge the power battery 210.

Specifically, as shown in FIG. 2, the first bridge arm 111 includes a first switching transistor VT1 and a second switching transistor VT2 that are connected in series, both a first end of the first switching transistor VT1 and a first end of the second switching transistor VT2 are connected to a controller (not shown in the figure), a second end of the first switching transistor VT1 is connected to a third end of the second switching transistor VT2, and a first node is used as the midpoint of the first bridge arm 111. The second bridge arm 112 includes a third switching transistor VT3 and a fourth switching transistor VT4 that are connected in series, both a first end of the third switching transistor VT3 and a first end of the fourth switching transistor VT4 are connected to the controller (not shown in the figure), a second end of the third switching transistor VT3 is connected to a third end of the fourth switching transistor VT4, and a second node is used as the midpoint of the second bridge arm 112. One end of the first inductor L1 is connected to the positive electrode of the alternating current charging interface 230, the other end of the first inductor L1 is connected to the midpoint of the first bridge arm 111, and the negative electrode of the alternating current charging interface 230 is connected to the midpoint of the second bridge arm 112. A third end of the first switching transistor VT1 (the first end of the first bridge arm 111) is connected to a third end of the third switching transistor VT3 (the first end of the second bridge arm 112) to form a first bus end, a second end of the second switching transistor VT2 (the second end of the first bridge arm 111) is connected to a second end of the fourth switching transistor VT4 (the second end of the second bridge arm 112) to form a second bus end, the first bus end is connected to the positive electrode of the power battery 210, and the second bus end is connected to the negative electrode of the power battery 210.

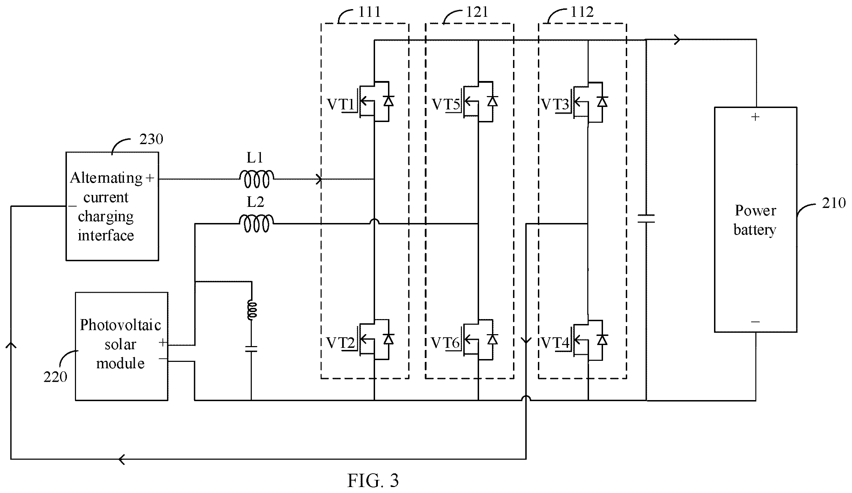

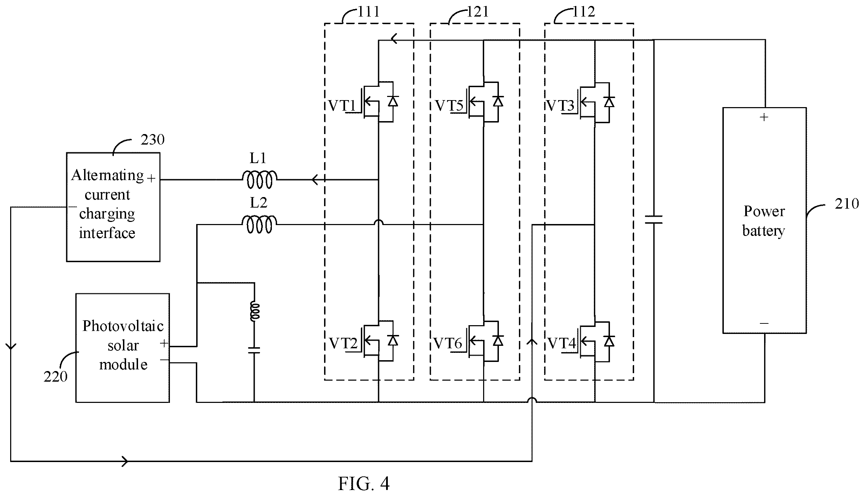

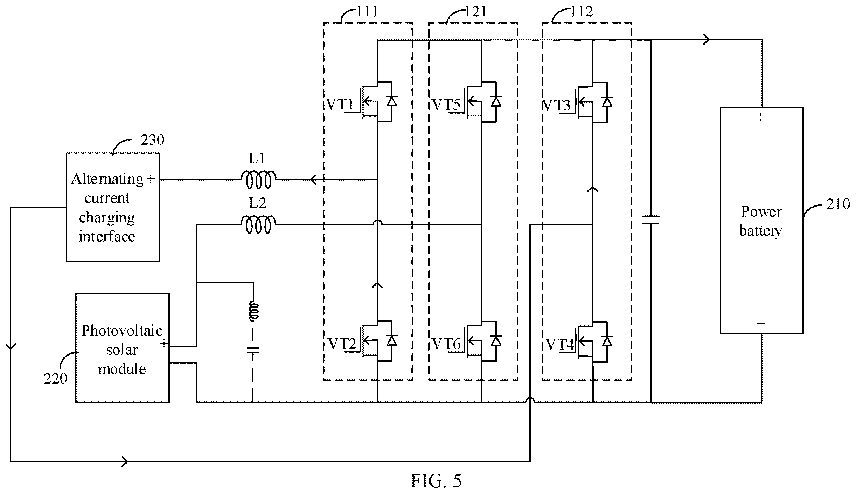

In the second state, to be specific, when the power battery 210 is charged through the alternating current charging interface 230, the first bridge arm 111 and the second bridge arm 112 are controlled, to convert an alternating current input through the alternating current charging interface 230 into a direct current to charge the power battery 210. For example, as shown in FIG. 2, in a positive half-cycle of an alternating current, in a first time period, the controller may control the first bridge arm 111 and the second bridge arm 112, for example, may control the second switching transistor VT2 and the fourth switching transistor VT4 to be in an on state, and control the first switching transistor VT1 and the third switching transistor VT3 to be in an off state, so that the alternating current charging interface 230, the first inductor L1, the second switching transistor VT2, and the fourth switching transistor VT4 form a loop, to store energy from the alternating current charging interface 230 in the first inductor L1; and as shown in FIG. 3, in a second time period, may control the first switching transistor VT1 and the fourth switching transistor VT4 to be in an on state, and control the second switching transistor VT2 and the third switching transistor VT3 to be in an off state, so that the alternating current charging interface 230, the first inductor L1, the first switching transistor VT1, the power battery 210, and the fourth switching transistor VT4 form a loop, to release energy stored in the first inductor L1 to the power battery 210, to convert an alternating current input through the alternating current charging interface 230 into a direct current to charge the power battery 210. For another example, as shown in FIG. 4, in a negative half-cycle of the alternating current, in a third time period, the controller may control the first bridge arm 111 and the second bridge arm 112, for example, may control the first switching transistor VT1 and the third switching transistor VT3 to be in an on state, and control the second switching transistor VT2 and the fourth switching transistor VT4 to be in an off state, so that the alternating current charging interface 230, the first inductor L1, the first switching transistor VT1, and the third switching transistor VT3 form a loop, to store energy from the alternating current charging interface 230 in the first inductor L1; and as shown in FIG. 5, in a fourth time period, may control the second switching transistor VT2 and the third switching transistor VT3 to be in an on state, and control the first switching transistor VT1 and the fourth switching transistor VT4 to be in an off state, so that the alternating current charging interface 230, the third switching transistor VT3, the power battery 210, the second switching transistor VT2, and the first inductor L1 form a loop, to release energy stored in the first inductor L1 to the power battery 210, to convert an alternating current input through the alternating current charging interface 230 into a direct current to charge the power battery 210.

It should be noted that, to avoid a short-circuit event, an upper bridge arm and a lower bridge arm of a same bridge arm cannot be both turned on. To be specific, when an upper bridge arm of a bridge arm is in an on state, a lower bridge arm of the bridge arm is in an off state; or when a lower bridge arm of a bridge arm is in an on state, an upper bridge arm of the bridge arm is in an off state. The controller may control the first bridge arm 111 and the second bridge arm 112 by using a periodic control signal, such as a PWM signal.

According to an embodiment of the present disclosure, as shown in FIG. 2, the photovoltaic charging module 120 includes a second inductor L2 and a third bridge arm 121, a positive electrode of the photovoltaic solar module 220 is adapted to be connected to a first end of the second inductor L2, a second end of the second inductor L2 is connected to a midpoint of the third bridge arm 121, the positive electrode of the power battery 210 is adapted to be connected to a first end of the third bridge arm 121, and the negative electrode of the power battery 210 is adapted to be connected to a second end of the third bridge arm 121.

According to an embodiment of the present disclosure, in a third state, the third bridge arm 121 is configured to charge the power battery 210 after electric energy output by the photovoltaic solar module 220 undergoes a voltage change.

Specifically, as shown in FIG. 2, the third bridge arm 121 includes a fifth switching transistor VT5 and a sixth switching transistor VT6 that are connected in series, both a first end of the fifth switching transistor VT5 and a first end of the sixth switching transistor VT6 are connected to the controller (not shown in the figure), a second end of the fifth switching transistor VT5 is connected to a third end of the sixth switching transistor VT6, a third node is used as the midpoint of the third bridge arm 121, the positive electrode of the photovoltaic solar module 220 is connected to the first end of the second inductor L2, the second end of the second inductor L2 is connected to the midpoint of the third bridge arm 121, and the positive electrode and the negative electrode of the power battery 210 are respectively connected to the first end (a third end of the fifth switching transistor VT5) and the second end (a second end of the sixth switching transistor VT6) of the third bridge arm 121.

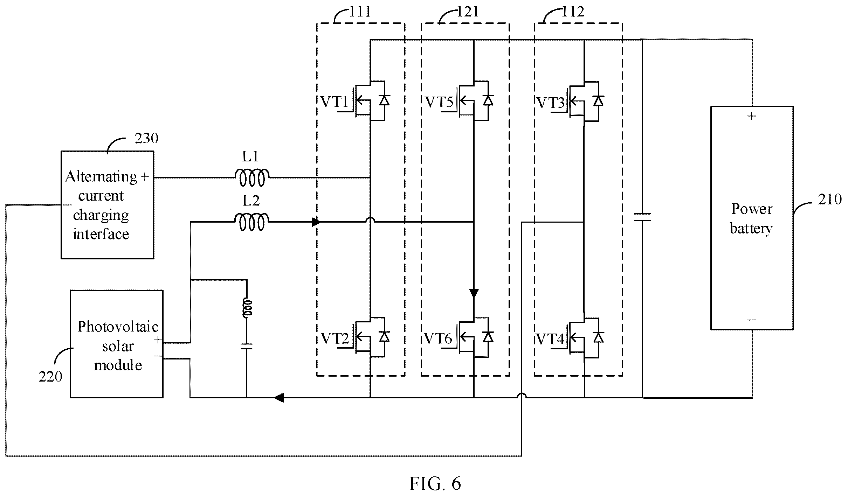

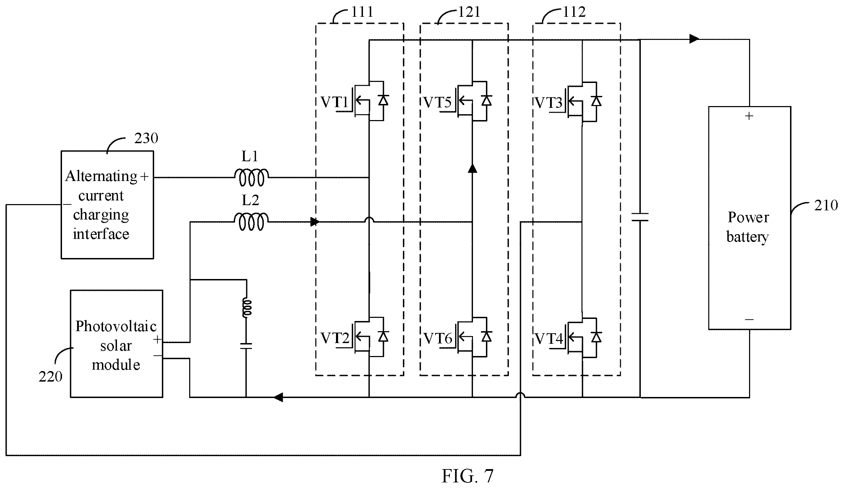

In the third state, to be specific, when the power battery 210 is charged through the photovoltaic solar module 220, the third bridge arm 121 is controlled, to charge the power battery 210 after electric energy output by the photovoltaic solar module 220 undergoes a voltage change. For example, as shown in FIG. 6, the controller may control the third bridge arm 121, for example, in a first time period, may control the sixth switching transistor VT6 to be in an on state, and control the fifth switching transistor VT5 to be in an off state, so that the photovoltaic solar module 220, the second inductor L2, and the sixth switching transistor VT6 form a loop, to store energy of the photovoltaic solar module 220 in the second inductor L2; and as shown in FIG. 7, in a second time period, may control the fifth switching transistor VT5 to be in an on state, and control the sixth switching transistor VT6 to be in an off state, so that the photovoltaic solar module 220, the second inductor L2, the fifth switching transistor VT5, and the power battery 210 form a loop, to superimpose energy stored in the second inductor L2 on a direct current of the photovoltaic solar module 220, so that a charging voltage provided by the photovoltaic solar module 220 increases, to charge the power battery 210 at an increased voltage.

According to an embodiment of the present disclosure, an output voltage of the photovoltaic solar module 220 is greater than 60 V.

Specifically, the photovoltaic solar module 220 may include a plurality of photovoltaic solar panels, and the plurality of photovoltaic solar panels are connected in series, so that the output voltage of the photovoltaic solar module 220 can be increased. To be specific, the plurality of photovoltaic solar panels are connected in series to form a high-voltage solar panel, so that the output voltage of the photovoltaic solar module 220 is greater than 60 V, to directly charge the power battery 210 after energy of the solar panel passes through the photovoltaic charging module 120, thereby reducing the number of inverse transformations, and improving the conversion rate.

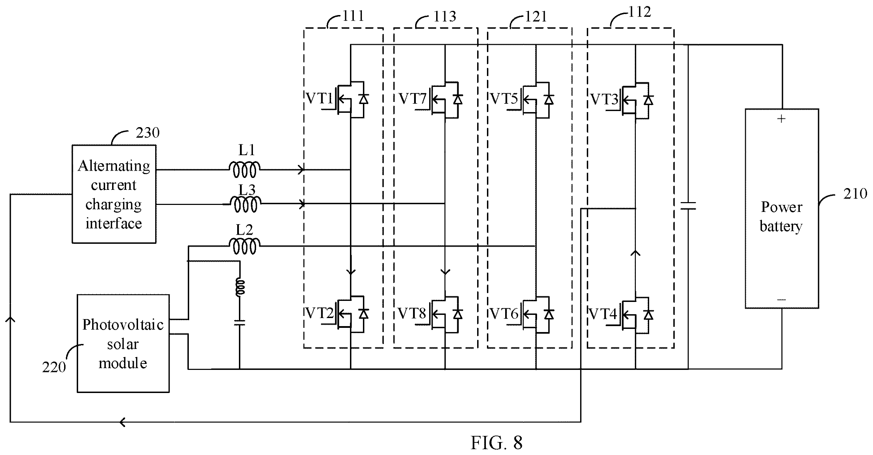

According to an embodiment of the present disclosure, as shown in FIG. 8, the alternating current charging module 110 further includes a third inductor L3 and a fourth bridge arm 113, the positive electrode of the alternating current charging interface 230 is adapted to be connected to a first end of the third inductor L3, a second end of the third inductor L3 is connected to a midpoint of the fourth bridge arm 113, the positive electrode of the power battery 210 is adapted to be connected to a first end of the fourth bridge arm 113, and the negative electrode of the power battery 210 is adapted to be connected to a second end of the fourth bridge arm 113.

According to an embodiment of the present disclosure, the charging apparatus of the power battery 210 further includes a controller 130 (not shown in the figure). The controller 130 is configured to: in a fourth state, control the second bridge arm 112, and alternately control the first bridge arm 111 and the fourth bridge arm 113, to convert an alternating current input through the alternating current charging interface 230 into a direct current to charge the power battery 210.

Specifically, as shown in FIG. 8, the fourth bridge arm 113 includes a seventh switching transistor VT7 and an eighth switching transistor VT8 that are connected in series, both a first end of the seventh switching transistor VT7 and a first end of the eighth switching transistor VT8 are connected to the controller 130 (not shown in the figure), a second end of the seventh switching transistor VT7 is connected to a third end of the eighth switching transistor VT8, a fourth node is used as the midpoint of the fourth bridge arm 113, the positive electrode of the alternating current charging interface 230 is connected to the first end of the third inductor L3, the second end of the third inductor L3 is connected to the midpoint of the fourth bridge arm, and the positive electrode and the negative electrode of the power battery 210 are respectively connected to the first end (a third end of the seventh switching transistor VT7) and the second end (a second end of the eighth switching transistor VT8) of the fourth bridge arm 113.

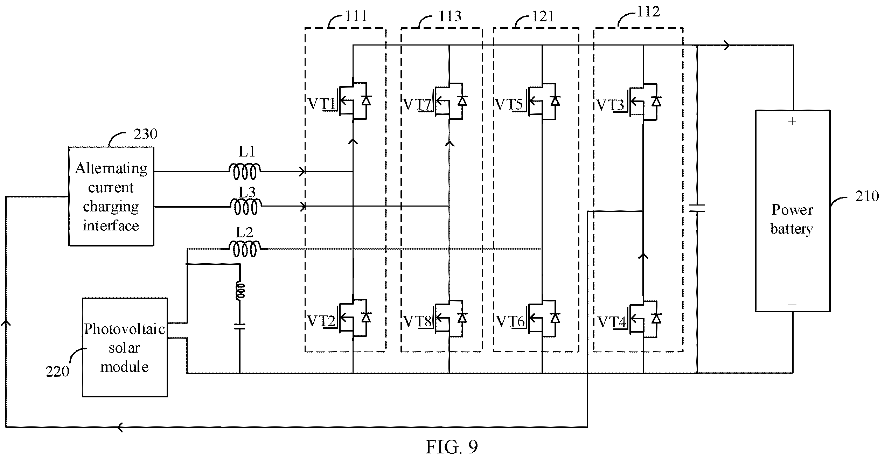

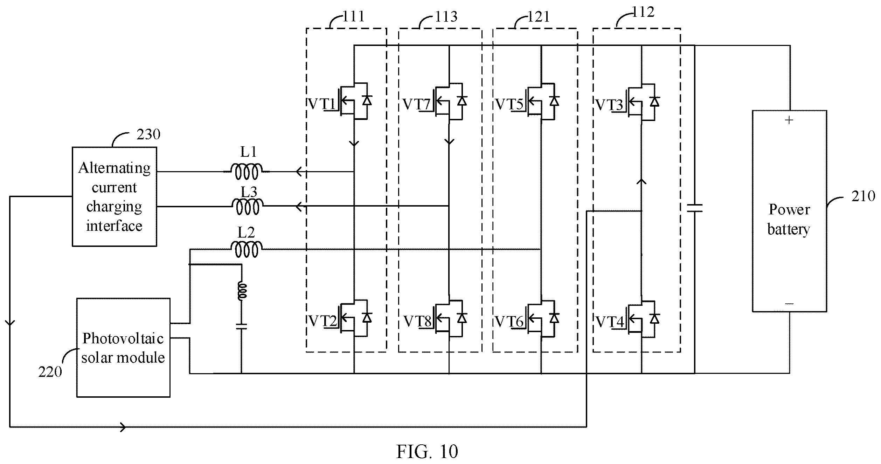

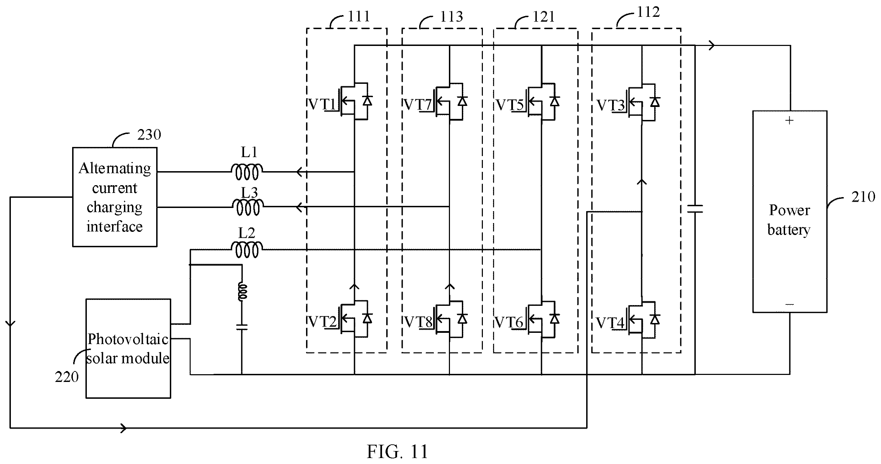

In the fourth state, to be specific, during two-phase alternate alternating current charging, the second bridge arm 112 is controlled, and the first bridge arm 111 and the fourth bridge arm 113 are alternately controlled, to convert an alternating current input through the alternating current charging interface 230 into a direct current to charge the power battery 210. For example, as shown in FIG. 8, in a positive half-cycle of an alternating current, in a first time period, the controller 130 may control the fourth switching transistor VT4 to be in an on state, alternately control the second switching transistor VT2 and the eighth switching transistor VT8 to be in an on state, control the third switching transistor VT3 to be in an off state, and alternately control the first switching transistor VT1 and the seventh switching transistor VT7 to be in an off state. When the fourth switching transistor VT4 and the second switching transistor VT2 are in an on state, the external alternating current charging interface 230, the first inductor L1, the second switching transistor VT2, and the fourth switching transistor VT4 form a loop, to store energy from the alternating current charging interface 230 in the first inductor L1. When the fourth switching transistor VT4 and the eighth switching transistor VT8 are in an on state, the external alternating current charging interface 230, the third inductor L3, the eighth switching transistor VT8, and the fourth switching transistor VT4 form a loop, to store energy from the alternating current charging interface 230 in the third inductor L3. In a second time period, as shown in FIG. 9, the controller 130 may control the fourth switching transistor VT4 to be in an on state, alternately control the first switching transistor VT1 and the seventh switching transistor VT7 to be in an on state, control the third switching transistor VT3 to be in an off state, and alternately control the second switching transistor VT2 and the eighth switching transistor VT8 to be in an off state. When the first switching transistor VT1 and the fourth switching transistor VT4 are in an on state, the external alternating current charging interface 230, the first inductor L1, the first switching transistor VT1, the power battery 210, and the fourth switching transistor VT4 form a loop, to release energy stored in the first inductor L1 to the power battery 210, to convert an alternating current input through the alternating current charging interface 230 into a direct current to charge the power battery 210. When the seventh switching transistor VT7 and the fourth switching transistor VT4 are in an on state, the alternating current charging interface 230, the third inductor L3, the seventh switching transistor VT7, the power battery 210, and the fourth switching transistor VT4 form a loop, to release energy stored in the third inductor L3 to the power battery 210, to convert an alternating current input through the alternating current charging interface 230 into a direct current to charge the power battery 210. In a negative half-cycle of the alternating current, as shown in FIG. 10, in a first time period, the controller 130 may control the third switching transistor VT3 to be in an on state, alternately control the first switching transistor VT1 and the seventh switching transistor VT7 to be in an on state, control the fourth switching transistor VT4 to be in an off state, and alternately control the second switching transistor VT2 and the eighth switching transistor VT8 to be in an off state. When the first switching transistor VT1 and the third switching transistor VT3 are in an on state, the alternating current charging interface 230, the first inductor L1, the first switching transistor VT1, and the third switching transistor VT3 form a loop, to store energy from the alternating current charging interface 230 in the first inductor L1. When the seventh switching transistor VT7 and the third switching transistor VT3 are in an on state, the alternating current charging interface 230, the third inductor L3, the seventh switching transistor VT7, and the third switching transistor VT3 form a loop, to store energy from the alternating current charging interface 230 in the third inductor L3. In a fourth time period, as shown in FIG. 11, the controller 130 may control the third switching transistor VT3 to be in an on state, alternately control the second switching transistor VT2 and the eighth switching transistor VT8 to be in an on state, control the fourth switching transistor VT4 to be in an off state, and alternately control the first switching transistor VT1 and the seventh switching transistor VT7 to be in an off state. When the second switching transistor VT2 and the third switching transistor VT3 are in an on state, the alternating current charging interface 230, the first inductor L1, the third switching transistor VT3, the power battery 210, and the second switching transistor VT2 form a loop, to release energy stored in the first inductor L1 to the power battery 210, to convert an alternating current input through the alternating current charging interface 230 into a direct current to charge the power battery 210. When the eighth switching transistor VT8 and the third switching transistor VT3 are in an on state, the alternating current charging interface 230, the third inductor L3, the third switching transistor VT3, the power battery 210, and the eighth switching transistor VT8 form a loop, to release energy stored in the third inductor L3 to the power battery 210, to convert an alternating current input through the alternating current charging interface 230 into a direct current.

According to an embodiment of the present disclosure, the controller 130 is configured to: in a fifth state, control the second bridge arm 112, and alternately control the first bridge arm 111 and the fourth bridge arm 113, to convert an alternating current input through the alternating current charging interface 230 into a direct current to charge the power battery 210; and control a third bridge arm 121, to charge the power battery 210 after electric energy output by the photovoltaic solar module 220 undergoes a voltage change.

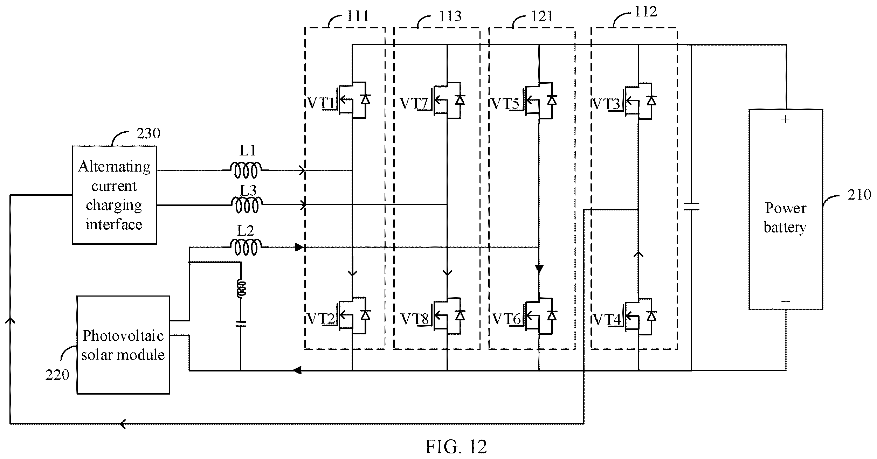

Specifically, in the fifth state, to be specific, when the power battery 210 is charged through two-phase alternate alternating current charging and photovoltaic charging in a coordinated manner, the second bridge arm 112 is controlled, and the first bridge arm 111 and the fourth bridge arm are alternately controlled, to convert an alternating current input through the alternating current charging interface 230 into a direct current to charge the power battery 210; and simultaneously, the third bridge arm 121 is controlled, to charge the power battery 210 after electric energy output by the photovoltaic solar module 220 undergoes a voltage change. For example, as shown in FIG. 12, in a positive half-cycle of an alternating current, in a first time period, the controller 130 may control the fourth switching transistor VT4 to be in an on state, alternately control the second switching transistor VT2 and the eighth switching transistor VT8 to be in an on state, control the third switching transistor VT3 to be in an off state, and alternately control the first switching transistor VT1 and the seventh switching transistor VT7 to be in an off state. When the fourth switching transistor VT4 and the second switching transistor VT2 are in an on state, the external alternating current charging interface 230, the first inductor L1, the second switching transistor VT2, and the fourth switching transistor VT4 form a loop, to store energy from the alternating current charging interface 230 in the first inductor L1. When the fourth switching transistor VT4 and the eighth switching transistor VT8 are in an on state, the external alternating current charging interface 230, the third inductor L3, the eighth switching transistor VT8, and the fourth switching transistor VT4 form a loop, to store energy from the alternating current charging interface 230 in the third inductor L3. The controller 130 further controls the sixth switching transistor VT6 to be in an on state, and controls the fifth switching transistor VT5 to be in an off state, so that the photovoltaic solar module 220, the second inductor L2, and the sixth switching transistor VT6 form a loop, to store energy of the photovoltaic solar panel in the second inductor L2.

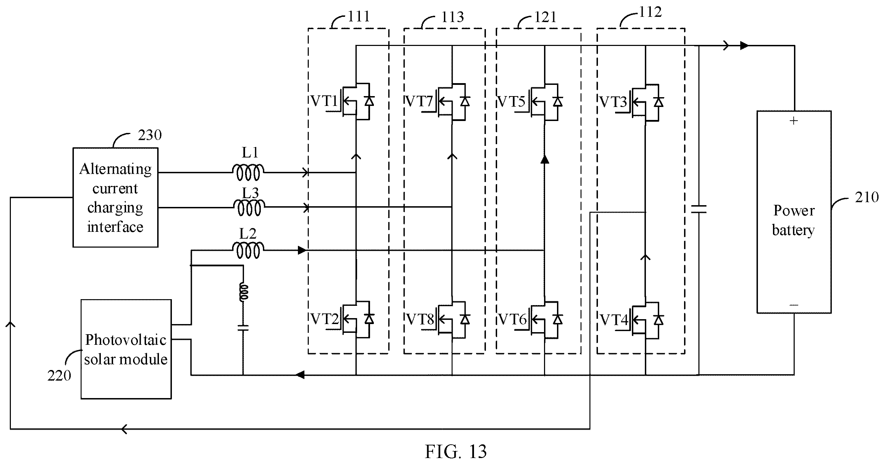

In a second time period, as shown in FIG. 13, the controller 130 may control the fourth switching transistor VT4 to be in an on state, alternately control the first switching transistor VT1 and the seventh switching transistor VT7 to be in an on state, control the third switching transistor VT3 to be in an off state, and alternately control the second switching transistor VT2 and the eighth switching transistor VT8 to be in an off state. When the first switching transistor VT1 and the fourth switching transistor VT4 are in an on state, the external alternating current charging interface 230, the first inductor L1, the first switching transistor VT1, the power battery 210, and the fourth switching transistor VT4 form a loop, to release energy stored in the first inductor L1 to the power battery 210, to convert an alternating current input through the alternating current charging interface 230 into a direct current to charge the power battery 210. When the seventh switching transistor VT7 and the fourth switching transistor VT4 are in an on state, the alternating current charging interface 230, the third inductor L3, the seventh switching transistor VT7, the power battery 210, and the fourth switching transistor VT4 form a loop, to release energy stored in the third inductor L3 to the power battery 210, to convert an alternating current input through the alternating current charging interface 230 into a direct current to charge the power battery 210. The controller 130 further controls the fifth switching transistor VT5 to be in an on state, and controls the sixth switching transistor VT6 to be in an off state, so that the photovoltaic solar module 220, the second inductor L2, the fifth switching transistor VT5, and the power battery 210 form a loop, to superimpose energy stored in the second inductor L2 on a direct current of the photovoltaic solar module 220, so that a charging voltage provided by the photovoltaic solar module 220 increases, to charge the power battery 210 at an increased voltage.

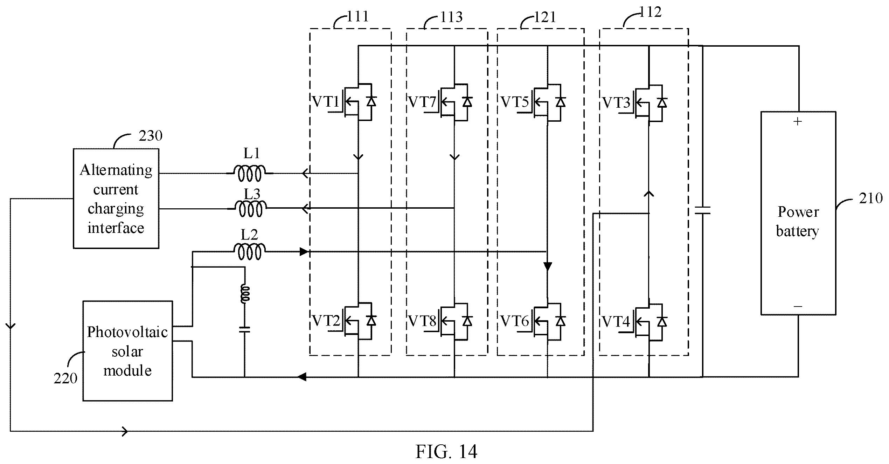

In a negative half-cycle of the alternating current, as shown in FIG. 14, in a first time period, the controller 130 may control the third switching transistor VT3 to be in an on state, alternately control the first switching transistor VT1 and the seventh switching transistor VT7 to be in an on state, control the fourth switching transistor VT4 to be in an off state, and alternately control the second switching transistor VT2 and the eighth switching transistor VT8 to be in an off state. When the first switching transistor VT1 and the third switching transistor VT3 are in an on state, the alternating current charging interface 230, the first inductor L1, the first switching transistor VT1, and the third switching transistor VT3 form a loop, to store energy from the alternating current charging interface 230 in the first inductor L1. When the seventh switching transistor VT7 and the third switching transistor VT3 are in an on state, the alternating current charging interface 230, the third inductor L3, the seventh switching transistor VT7, and the third switching transistor VT3 form a loop, to store energy from the alternating current charging interface 230 in the third inductor L3. The controller 130 further controls the sixth switching transistor VT6 to be in an on state, and controls the fifth switching transistor VT5 to be in an off state, so that the photovoltaic solar module 220, the second inductor L2, and the sixth switching transistor VT6 form a loop, to store energy of the photovoltaic solar panel in the second inductor L2.

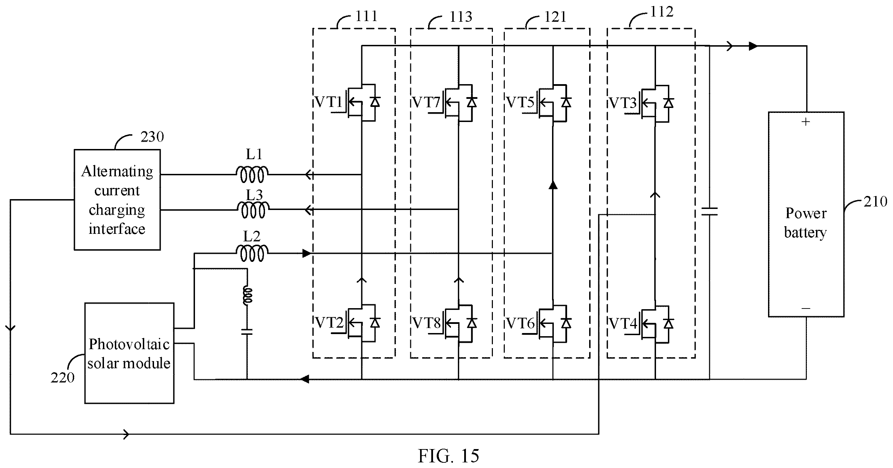

In a fourth time period, as shown in FIG. 15, the controller 130 may control the third switching transistor VT3 to be in an on state, alternately control the second switching transistor VT2 and the eighth switching transistor VT8 to be in an on state, control the fourth switching transistor VT4 to be in an off state, and alternately control the first switching transistor VT1 and the seventh switching transistor VT7 to be in an off state. When the second switching transistor VT2 and the third switching transistor VT3 are in an on state, the alternating current charging interface 230, the first inductor L1, the third switching transistor VT3, the power battery 210, and the second switching transistor VT2 form a loop, to release energy stored in the first inductor L1 to the power battery 210, to convert an alternating current input through the alternating current charging interface 230 into a direct current to charge the power battery 210. When the eighth switching transistor VT8 and the third switching transistor VT3 are in an on state, the alternating current charging interface 230, the third inductor L3, the third switching transistor VT3, the power battery 210, and the eighth switching transistor VT8 form a loop, to release energy stored in the third inductor L3 to the power battery 210, to convert an alternating current input through the alternating current charging interface 230 into a direct current. The controller 130 further controls the fifth switching transistor VT5 to be in an on state, and controls the sixth switching transistor VT6 to be in an off state, so that the photovoltaic solar module 220, the second inductor L2, the fifth switching transistor VT5, and the power battery 210 form a loop, to superimpose energy stored in the second inductor L2 on a direct current of the photovoltaic solar module 220, so that a charging voltage provided by the photovoltaic solar module 220 increases, to charge the power battery 210 at an increased voltage. Therefore, charging efficiency is improved through multiphase alternate control.

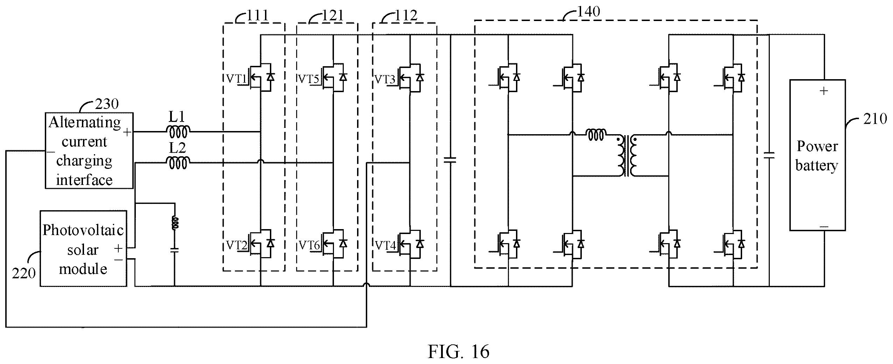

According to an embodiment of the present disclosure, as shown in FIG. 16, the charging apparatus 100 of the power battery 210 further includes a DC-DC module 140. A first end of the DC-DC module 140 is separately connected to the alternating current charging module 110 and the photovoltaic charging module 120, and the power battery 210 is adapted to be connected to both the alternating current charging module 110 and the photovoltaic charging module 120.

Specifically, as shown in FIG. 16, when the power battery 210 is charged through the alternating current charging interface 230 and the photovoltaic solar module 220, electric energy is delivered to the DC-DC module 140 after a current output by the alternating current charging interface 230 and a current output by the photovoltaic solar module 220 are boosted through the first inductor L1 and the second inductor L2. The DC-DC module 140 is controlled, for example, the controller 130 may control the DC-DC module 140 to be in an on state, so that the electric energy is delivered to the power battery 210 after being converted through the DC-DC module 140, to charge the power battery 210. Therefore, a power supply can be isolated from the power battery 210 in a charging process through the DC-DC module 140, to implement isolated charging, thereby improving charging safety.

According to an embodiment of the present disclosure, an inductor in a PFC (Power Factor Correction) circuit is reused as the first inductor L1 and the third inductor L3, and a bridge arm in the PFC circuit is reused as the first bridge arm 111 and the second bridge arm 112. Therefore, components in a PFC circuit of an on-board charger are reused, to reduce the number of new components introduced into the charging apparatus, thereby reducing costs of the charging apparatus.

According to an embodiment of the present disclosure, an inductor in a PFC circuit is reused as the second inductor L2, and a bridge arm in the PFC circuit is reused as the third bridge arm 121. Therefore, components in a PFC circuit of an on-board charger are reused, to reduce the number of new components introduced into the charging apparatus, thereby reducing costs of the charging apparatus.

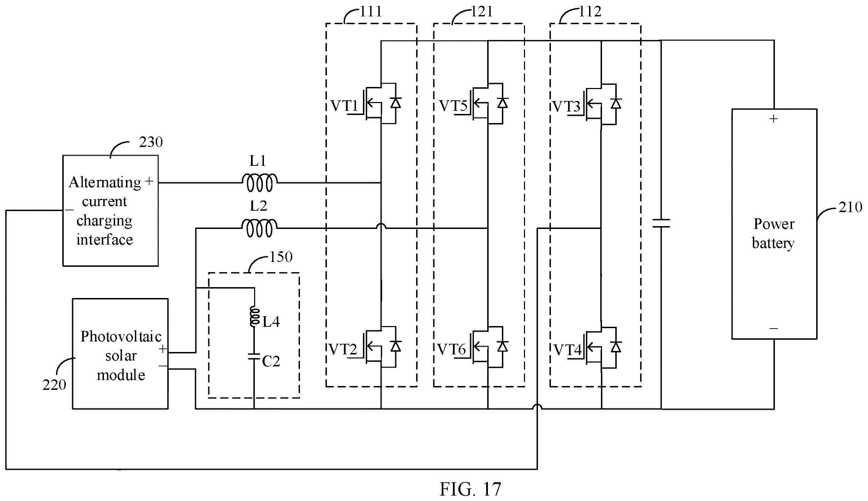

According to an embodiment of the present disclosure, as shown in FIG. 17, the charging apparatus 100 of the power battery 210 further includes a buffer module 150. The buffer module 150 is disposed between the positive electrode and a negative electrode of the photovoltaic solar module 220, and the buffer module 150 is configured to mitigate impact on a component of a voltage conversion module at a moment when the photovoltaic solar module 220 outputs electric energy to the voltage conversion module.

Specifically, the buffer module 150 is disposed between the positive electrode and the negative electrode of the photovoltaic solar module 220, so that when the photovoltaic solar module 220 is connected to a charging system to charge the power battery 210, charging of an OBC component at an instantaneous voltage can be alleviated, to address impact of the instantaneous voltage on a bus capacitor, thereby prolonging the service life of the OBC.

According to an embodiment of the present disclosure, as shown in FIG. 17, the buffer module 150 includes a fourth inductor L4 and a second capacitor C2 that are connected in series. The other end of the fourth inductor L4 is connected to the positive electrode of the photovoltaic solar module 220, and the other end of the second capacitor C2 is connected to the negative electrode of the photovoltaic solar module 220. Therefore, when the photovoltaic solar module 220 is connected to the charging apparatus of the power battery 210, impact of an instantaneous voltage on a component in a circuit can be mitigated through the fourth inductor and the second capacitor, thereby prolonging the service life of the charging apparatus of the power battery 210.

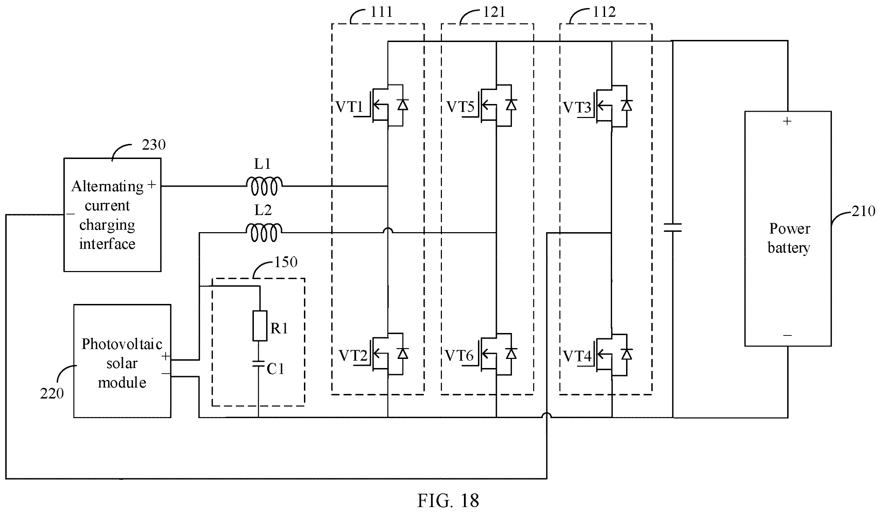

According to an embodiment of the present disclosure, as shown in FIG. 18, the buffer module 150 includes a first resistor R1 and a first capacitor C1 that are connected in series. The other end of the first resistor R1 is connected to the positive electrode of the photovoltaic solar module 220, and the other end of the first capacitor C1 is connected to the negative electrode of the photovoltaic solar module 220. Therefore, when the photovoltaic solar module 220 is connected to the charging apparatus of the power battery 210, impact of an instantaneous voltage on a component in a circuit can be mitigated through the first resistor and the first capacitor, thereby prolonging the service life of the charging apparatus of the power battery 210.

According to an embodiment of the present disclosure, a DC-DC circuit of an on-board charger OBC module is reused as the DC-DC module 140.

Specifically, the DC-DC circuit of the on-board charger OBC module is reused as the DC-DC module 140, to reduce the number of new components introduced into a charging circuit, reduce costs of the charging circuit, and implement isolated charging, thereby improving electricity use safety. In addition, the OBC module and the photovoltaic solar module 220 share the same controller, to reduce the number of required controllers, thereby reducing costs and also improving controller integration.

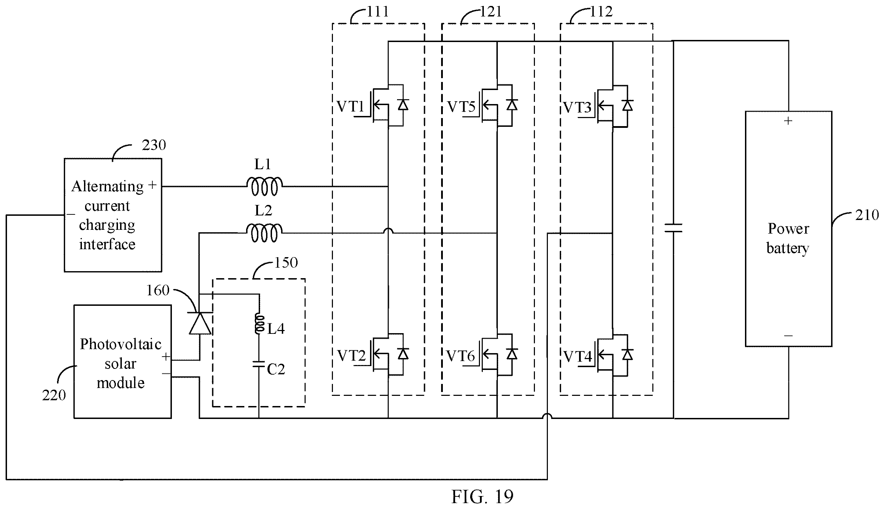

In addition, as shown in FIG. 19, the charging apparatus of the power battery 210 may further include a first diode 160. A positive electrode of the first diode 160 is connected to the positive electrode of the photovoltaic solar module 220, and a negative electrode of the first diode 160 is connected to the first end of the second inductor L2. When the photovoltaic solar module 220 is mistakenly connected to the charging apparatus of the power battery 210, to be specific, the positive electrode and the negative electrode of the photovoltaic solar module 220 are connected in reverse, the first diode 160 can prevent a direct current output by the photovoltaic solar module 220 from flowing to a circuit, to avoid damage to a component. In addition, in a normal working process of the photovoltaic solar module 220, the first diode 160 can further prevent a current output by the alternating current charging interface 230 from entering the photovoltaic solar module 220, to avoid damage to the photovoltaic solar module 220.

In conclusion, according to the power battery charging apparatus in this embodiment of the present disclosure, in the first state, the alternating current charging module is configured to convert an alternating current input through the alternating current charging interface into a direct current to charge the power battery, and the photovoltaic charging module is configured to charge the power battery after electric energy output by the photovoltaic solar module undergoes a voltage change. Therefore, the charging apparatus can increase the charging speed, increase the solar conversion rate, and reduce the demand for grid energy, thereby reducing charging costs for vehicle owners.

Corresponding to the foregoing embodiments, the present disclosure further provides a charging control system.

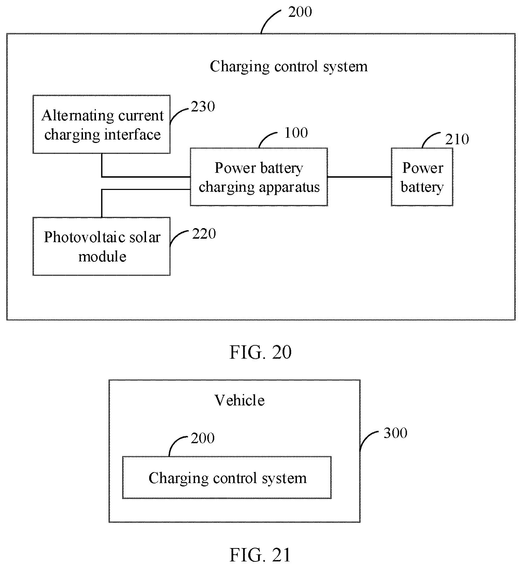

As shown in FIG. 20, a charging control system 200 in an embodiment of the present disclosure may include a power battery 210 and the foregoing power battery charging apparatus 100. The power battery 210 is connected to a first end of the charging apparatus 100.

According to an embodiment of the present disclosure, the charging control system 200 further includes a photovoltaic solar module 220. The photovoltaic solar module 220 is connected to a second end of the charging apparatus 100.

According to an embodiment of the present disclosure, the charging control system 200 further includes an alternating current charging interface 230. The alternating current charging interface 230 is connected to the second end of the charging apparatus 100.

It should be noted that for details not disclosed in the charging control system in this embodiment of the present disclosure, refer to the details disclosed in the power battery charging apparatus in the embodiments of the present disclosure. Details are not described herein again.

According to the charging control system in this embodiment of the present disclosure, the power battery 210 and the foregoing power battery charging apparatus 100 are included, so that the charging speed can be increased, the solar conversion rate can be increased, and the demand for grid energy can be reduced, thereby reducing charging costs for vehicle owners.

Corresponding to the foregoing embodiments, the present disclosure further provides a vehicle.

As shown in FIG. 21, a vehicle 300 in an embodiment of the present disclosure may include the foregoing charging control system 200.

According to the vehicle in this embodiment of the present disclosure, the foregoing charging control system is included, so that the charging speed can be increased, the solar conversion rate can be increased, and the demand for grid energy can be reduced, thereby reducing charging costs for vehicle owners.

It should be noted that the logic and/or steps represented in the flowchart or described herein in another manner, for example, may be considered as an ordered list of executable instructions for implementing logical functions, and may be specifically implemented in any computer-readable medium, for use by an instruction execution system, apparatus, or device (for example, a computer-based system, a system including a processor, or another system that can fetch instructions from an instruction execution system, apparatus, or device and execute the instructions), or use in combination with the instruction execution system, apparatus, or device. For the purposes of this specification, the "computer-readable medium" may be any apparatus that can include, store, communicate, propagate, or transmit a program for use by an instruction execution system, apparatus, or device or use in combination with the instruction execution system, apparatus, or device. More specific examples (a non-exhaustive list) of the computer-readable medium include the following: an electrical connection part (electronic apparatus) having one or more cables, a portable computer disc box (magnetic apparatus), a random access memory (RAM), a read-only memory (ROM), an erasable programmable read-only memory (EPROM or a flash memory), an optical fiber apparatus, and a compact disc read-only memory (CDROM). In addition, the computer-readable medium may even be a paper or another suitable medium on which the program can be printed, since the program may be electronically obtained, for example, by optically scanning the paper or another medium and then performing editing, interpreting, or processing in another proper manner if necessary, and then the program is stored in a computer memory.

It will be understood that the parts of the present disclosure may be implemented by hardware, software, firmware, or a combination thereof. In the foregoing implementations, the plurality of steps or methods may be implemented by software or firmware stored in a memory and executed by a proper instruction execution system. For example, if the plurality of steps or methods are implemented by hardware, as in another implementation, the plurality of steps or methods may be implemented by using any one or a combination of the following technologies known in the art: a discrete logic circuit having a logic gate circuit for implementing a logical function for a data signal, an application-specific integrated circuit having a proper combined logic gate circuit, a programmable gate array (PGA), a field programmable gate array (FPGA), and the like.

In the description of this specification, descriptions provided with reference to the term such as "an embodiment", "some embodiments", "an example", "a specific example", or "some examples" mean that specific features, structures, materials, or characteristics described with reference to this embodiment or example are included in at least one embodiment or example of the present disclosure. In this specification, the schematic expressions of the foregoing terms not necessarily indicate the same embodiment or example. In addition, the described specific features, structures, materials, or characteristics may be combined in a proper manner in any one or more embodiments or examples.

In addition, the term "first" or "second" is merely used for description purposes, and will not be understood as an indication or implication of relative importance or an implication of the number of indicated technical features. Therefore, a feature limited by "first" or "second" may explicitly or implicitly include at least one feature. In the description of the present disclosure, "a plurality of" means at least two, for example, two or three, unless otherwise clearly and specifically limited.

In the present disclosure, the term such as "installation", "interconnection", "connection", or "fastening" will be understood in a broad sense unless otherwise clearly specified and limited. For example, the term may be a fixed connection, a detachable connection, or integration; may be a mechanical connection, or an electrical connection; may be a direct connection, or an indirect connection through an intermediate medium; or may be an interconnection between two elements, or an interaction relationship between two elements, unless otherwise clearly limited. A person of ordinary skill in the art may understand specific meanings of the foregoing terms in the present disclosure based on a specific case.

Although the embodiments of the present disclosure have been shown and described above, it may be understood that the foregoing embodiments are examples and will not be understood as limitations on the present disclosure, and a person of ordinary skill in the art can make changes, modifications, substitutions, or variations on the foregoing embodiments within the scope of the present disclosure.

## Claims

1. A power battery charging apparatus (100), comprising:
an alternating current charging module (110), wherein an alternating current charging interface (230) is adapted to be connected to a first end of the alternating current charging module (110), and a power battery (210) is adapted to be connected to a second end of the alternating current charging module (110); and
a photovoltaic charging module (120), wherein a photovoltaic solar module (220) is adapted to be connected to a first end of the photovoltaic charging module (120), and the power battery (210) is adapted to be connected to a second end of the photovoltaic charging module (120), wherein
in a first state, the alternating current charging module (110) is configured to convert an alternating current input through the alternating current charging interface (230) into a direct current to charge the power battery (210), and the photovoltaic charging module (120) is configured to charge the power battery (210) after electric energy output by the photovoltaic solar module (220) undergoes a voltage change.

2. The power battery charging apparatus (100) according to claim 1, wherein the alternating current charging module (110) comprises at least a first inductor (L1), a first bridge arm (111), and a second bridge arm (112), a positive electrode of the alternating current charging interface (230) is adapted to be connected to a first end of the first inductor (L1), a second end of the first inductor (L1) is connected to a midpoint of the first bridge arm (111), a negative electrode of the alternating current charging interface (230) is adapted to be connected to a midpoint of the second bridge arm (112), a positive electrode of the power battery (210) is adapted to be connected to a first end of the first bridge arm (111) and a first end of the second bridge arm (112), and a negative electrode of the power battery (210) is adapted to be connected to a second end of the first bridge arm (111) and a second end of the second bridge arm (112).

3. The power battery charging apparatus (100) according to claim 2, wherein in a second state, the first bridge arm (111) and the second bridge arm (112) are configured to convert an alternating current input through the alternating current charging interface (230) into a direct current to charge the power battery (210).

4. The power battery charging apparatus (100) according to any one of claims 1 to 3, wherein the photovoltaic charging module comprises a second inductor (L2) and a third bridge arm (121), a positive electrode of the photovoltaic solar module (220) is adapted to be connected to a first end of the second inductor (L2), a second end of the second inductor (L2) is connected to a midpoint of the third bridge arm (121), the positive electrode of the power battery (210) is adapted to be connected to a first end of the third bridge arm (121), and the negative electrode of the power battery (210) is adapted to be connected to a second end of the third bridge arm (121).

5. The power battery charging apparatus (100) according to claim 4, wherein in a third state, the third bridge arm (121) is configured to charge the power battery (210) after electric energy output by the photovoltaic solar module (220) undergoes a voltage change.

6. The power battery charging apparatus (100) according to any one of claims 1 to 5, wherein an output voltage of the photovoltaic solar module (220) is greater than 60 V.

7. The power battery charging apparatus (100) according to claim 2 or 3, wherein the alternating current charging module further comprises a third inductor (L3) and a fourth bridge arm (113), the positive electrode of the alternating current charging interface (230) is adapted to be connected to a first end of the third inductor (L3), a second end of the third inductor (L3) is connected to a midpoint of the fourth bridge arm (113), the positive electrode of the power battery (210) is adapted to be connected to a first end of the fourth bridge arm (113), and the negative electrode of the power battery (210) is adapted to be connected to a second end of the fourth bridge arm (113).

8. The power battery charging apparatus (100) according to claim 7, further comprising:
a controller (130), wherein the controller (130) is configured to: in a fourth state, control the second bridge arm (112), and alternately control the first bridge arm (111) and the fourth bridge arm (113), to convert an alternating current input through the alternating current charging interface (230) into a direct current to charge the power battery (210).

9. The power battery charging apparatus (100) according to claim 8, wherein
the controller (130) is configured to: in a fifth state, control the second bridge arm (112), and alternately control the first bridge arm (111) and the fourth bridge arm (113), to convert an alternating current input through the alternating current charging interface (230) into a direct current to charge the power battery (210); and control a third bridge arm (121), to charge the power battery (210) after electric energy output by the photovoltaic solar module (220) undergoes a voltage change.

10. The power battery charging apparatus (100) according to any one of claims 1 to 9, further comprising:
a DC-DC module (140), wherein a first end of the DC-DC module (140) is separately connected to the alternating current charging module (110) and the photovoltaic charging module (120), and the power battery (210) is adapted to be connected to both the alternating current charging module (110) and the photovoltaic charging module (120).

11. The power battery charging apparatus (100) according to any one of claims 7 to 9, wherein an inductor in a PFC circuit is reused as the first inductor (L1) and the third inductor (L3), and a bridge arm in the PFC circuit is reused as the first bridge arm (111) and the second bridge arm (112).

12. The power battery charging apparatus (100) according to claim 4 or 5, wherein an inductor in a PFC circuit is reused as the second inductor (L2), and a bridge arm in the PFC circuit is reused as the third bridge arm (121).

13. The power battery charging apparatus (100) according to any one of claims 1 to 12, further comprising:
a buffer module (150), wherein the buffer module (150) is disposed between the positive electrode and a negative electrode of the photovoltaic solar module (220), and the buffer module (150) is configured to mitigate impact on a component of a voltage conversion module at a moment when the photovoltaic solar module (220) outputs electric energy to the voltage conversion module.

14. The power battery charging apparatus (100) according to claim 13, wherein the buffer module (150) comprises:
a first resistor (R1) and a first capacitor (C1) that are connected in series, wherein the other end of the first resistor (R1) is connected to the positive electrode of the photovoltaic solar module (220), and the other end of the first capacitor (C1) is connected to the negative electrode of the photovoltaic solar module (220).

15. The power battery charging apparatus (100) according to claim 13 or 14, wherein the buffer module comprises:
a fourth inductor (L4) and a second capacitor (C2) that are connected in series, wherein the other end of the fourth inductor (L4) is connected to the positive electrode of the photovoltaic solar module (220), and the other end of the second capacitor (C2) is connected to the negative electrode of the photovoltaic solar module (220).

16. The power battery charging apparatus (100) according to claim 10, wherein a DC-DC circuit of an on-board charger OBC module is reused as the DC-DC module (140).

17. A charging control system (200), comprising a power battery and the power battery charging apparatus (100) according to any one of claims 1 to 16, wherein the power battery (210) is connected to a first end of the charging apparatus (100).

18. The charging control system (200) according to claim 17, further comprising:
a photovoltaic solar module (220), wherein the photovoltaic solar module (220) is connected to a second end of the charging apparatus (100).

19. The charging control system (200) according to claim 17 or 18, further comprising:
an alternating current charging interface (230), wherein the alternating current charging interface (230) is connected to the second end of the charging apparatus (100).

20. A vehicle (300), comprising the charging control system (200) according to any one of claims 17 to 19 or the charging apparatus (100) according to any one of claims 1 to 16.
